# EUROPEAN PATENT APPLICATION

(11) **EP 2 535 917 A2**
(43) Date of publication of application: **19.12.2012**
(21) Application number: 12151565.4
(22) Date of filing: 18.01.2012
(51) Int. Cl.: H01J 29/02, H01J 31/12

(54) **Field emission apparatus and liquid crystal display having the same**

(30) Priority: 17.06.2011 KR 20110059299
(71) Applicant: Samsung Electronics Co., Ltd., Suwon-si, Gyeonggi-do, 443-742 (KR)
(72) Inventor: Lee, Jae-young, Seoul (KR); Lee, Sang-jin, Gyeonggi-do (KR); Kwon, Byoung-seok, Gyeonggi-do (KR); Chang, Dong-su, Chungcheongnam-do (KR)
(74) Representative: Grootscholten, Johannes A.M.

(57) **Abstract**

A field emission apparatus (1), liquid crystal display and television are provided, the field emission apparatus including a cathode plate (10); a side frame (30) disposed around a perimeter of the cathode plate; an anode plate (20') disposed parallel to the cathode plate; an anode electrode (21) disposed on the anode plate; a connection electrode (60) which is disposed between the anode plate and the side frame, the connection electrode comprising a first end portion (61) in contact with the anode electrode, and a second end portion (62) disposed outside the side frame; and a supporting member (51) which supports the first end portion of the connection electrode.

## Description

### BACKGROUND

### 1. Field

Apparatuses and methods consistent with exemplary embodiments relate to a field emission apparatus, and more particularly, to an electrode structure to apply high voltage to an anode electrode of a field emission apparatus.

### 2. Description of the Related Art

A field emission apparatus is an apparatus using a field emission phenomenon and may be used as a display apparatus or a backlight unit of a liquid crystal display.

Generally, a field emission apparatus has an upper plate and a lower plate which are spaced apart from each other. A space between the upper plate and the lower plate is sealed in a vacuum. Therefore, a plurality of spacers is used to uniformly maintain a gap between the upper and lower plates in a vacuum. The upper plate is an anode plate on which an anode electrode is formed. The lower plate is a cathode plate on which a cathode electrode is formed. The anode electrode needs a connection electrode for receiving an electric power of high voltage from an electric power supply apparatus.

### SUMMARY

One or more exemplary embodiments may overcome the above disadvantages and other disadvantages not described above. However, it is understood that one or more exemplary embodiments are not required to overcome the disadvantages described above, and may not overcome any of the problems described above.

Exemplary embodiments provide a field emission apparatus having a connection electrode of which an electric resistance characteristic is not decreased, even if it has been used for an extended period of time, and which is formed to minimize a void area of the field emission apparatus.

According an aspect of an exemplary embodiment, there is provided a field emission apparatus including: a cathode plate; a side frame disposed around a perimeter of the cathode plate; an anode plate disposed parallel to the cathode plate; an anode electrode disposed on the anode plate; a connection electrode which is disposed between the anode plate and the side frame, the connection electrode comprising a first end portion in contact with the anode electrode, and a second end portion disposed outside the side frame; and a supporting member which supports the first end portion of the connection electrode.

The field emission apparatus may further include: a metal pin disposed on the second end portion of the connection electrode.

The field emission apparatus may further include: an electric power supply apparatus which may include a socket into which one end of the metal pin is inserted, wherein the electric power supply apparatus supplies electric power to the anode electrode.

The metal pin may be welded to the second end portion of the connection electrode.

The second end portion of the connection electrode and the metal pin may be fixed to the side frame.

The field emission apparatus may further include: a plurality of spacers which maintain a gap between the anode plate and the cathode plate, wherein the supporting member is formed in a same shape as a spacer from among the plurality of spacers.

The connection electrode may include a fixing member which fixes one end of the supporting member to the connection electrode.

The fixing member of the connection electrode may include a bending portion which extends from the first end portion of the connection electrode and is perpendicular to the connection electrode and fixing portions which extend from the bending portion and fix the supporting member.

The supporting member may be fixed to the connection electrode by frit.

The connection electrode may include a chrome oxide film formed on a surface of the connection electrode.

According an aspect of another exemplary embodiment, there is provided a liquid crystal display including: a liquid crystal panel; and a field emission apparatus disposed below the liquid crystal panel, wherein the field emission apparatus may include: a cathode plate; a side frame disposed along a perimeter of the cathode plate; an anode plate disposed parallel to the cathode plate; an anode electrode formed on the anode plate; a connection electrode which is disposed between the anode plate and the side frame, wherein the connection electrode may include a first end portion and a second end portion, and wherein the first end portion contacts the anode electrode and the second end portion is outside the side frame; and a supporting member which supports the first end portion of the connection electrode.

The liquid crystal display may further include a metal pin disposed on the second end portion of the connection electrode.

The liquid crystal display may further include: an electric power supply apparatus which may include a socket into which one end of the metal pin is inserted, wherein the electric power supply apparatus supplies electric power to the anode electrode.

The connection electrode may include a fixing member which fixes one end of the supporting member to the connection electrode.

According an aspect of another exemplary embodiment, there is provided a television including: a signal processing unit; and a liquid crystal display, wherein the signal processing unit controls the liquid crystal display, wherein the liquid crystal display may include a liquid crystal panel and a field emission apparatus disposed below the liquid crystal panel, wherein the field emission apparatus may include: a cathode plate; a side frame disposed along a perimeter of the cathode plate; an anode plate disposed parallel to the cathode plate; an anode electrode formed on the anode plate; a connection electrode which is disposed between the anode plate and the side frame, wherein the connection electrode may include a first end portion and a second end portion, and wherein the first end portion contacts the anode electrode and the second end portion is outside the side frame; and a supporting member which supports the first end portion of the connection electrode.

According an aspect of another exemplary embodiment, there is provided a field emission apparatus including: a cathode plate; a side frame disposed along a perimeter of the cathode plate; an anode plate disposed parallel to the cathode plate and opposite the side frame; an anode electrode formed on the anode plate; a connection electrode which may include a first end portion that contacts the anode electrode and a second end portion which is outside the side frame.

The field emission apparatus may further include at least one supporting member which has a first end fixed to the connection electrode and a second end in contact with the cathode plate.

The field emission apparatus may further include a metal pin contacting the second end portion of the connection electrode, wherein the metal pin is connectable with an electric power supply apparatus.

The field emission may further include at least one supporting member which has a first end fixed to the connection electrode and a second end in contact with the cathode plate, wherein the cathode plate, the side frame along the perimeter of the cathode plate, and the anode plate are disposed to form a space therebetween, and wherein if an electric power is supplied from the electric power supply apparatus to the metal pin, vacuum pressure in the space presses the supporting member so that the first end portion of the connection electrode contacts the anode electrode.

### BRIEF DESCRIPTION OF THE DRAWINGS

The above and/or other aspects will become apparent and more readily appreciated from the following description of exemplary embodiments, taken in conjunction with the accompanying drawings of which:

FIG. 1 is a partial sectional view illustrating a field emission apparatus having a connection electrode of a thick film structure;

FIG. 2 is a partial sectional view illustrating a field emission apparatus having a connection electrode according to an exemplary embodiment;

FIG. 3 is a partial perspective view illustrating a field emission apparatus which has an anode plate on a bottom side and no cathode plate;

FIG. 4 is an exploded perspective view illustrating a connection electrode assembly, an example of which is illustrated in FIG. 3;

FIG. 5 is a plan view illustrating the field emission apparatus, an example of which is illustrated in FIG. 3;

FIG. 6 is a perspective view illustrating a connection electrode with a fixing member;

FIG. 7 is a perspective view illustrating a connection electrode with a fixing member having another structure;

FIG. 8 is a perspective view illustrating a connection electrode with a fixing member having another structure;

FIG. 9 is a perspective view illustrating a connection electrode having a fixing member having another structure;

FIG. 10 is a sectional view illustrating a liquid crystal display that uses a field emission apparatus according to an exemplary embodiment as a backlight unit; and

FIG. 11 is a functional block diagram illustrating a television that uses a field emission apparatus according to an exemplary embodiment as a backlight unit.

### DETAILED DESCRIPTION OF THE EXEMPLARY EMBODIMENTS

Hereinafter, certain exemplary embodiments will be described in detail with reference to the accompanying drawings. Throughout the drawings, like reference numerals will be understood to refer to like parts, components and structures.

The matters defined herein, such as a detailed construction and elements thereof, are provided to facilitate understanding. However, exemplary embodiments may be carried out without those specifically defined matters. Also, well-known functions or constructions are omitted to provide a clear and concise description of exemplary embodiments. Further, dimensions of various elements in the accompanying drawings may be arbitrarily increased or decreased.

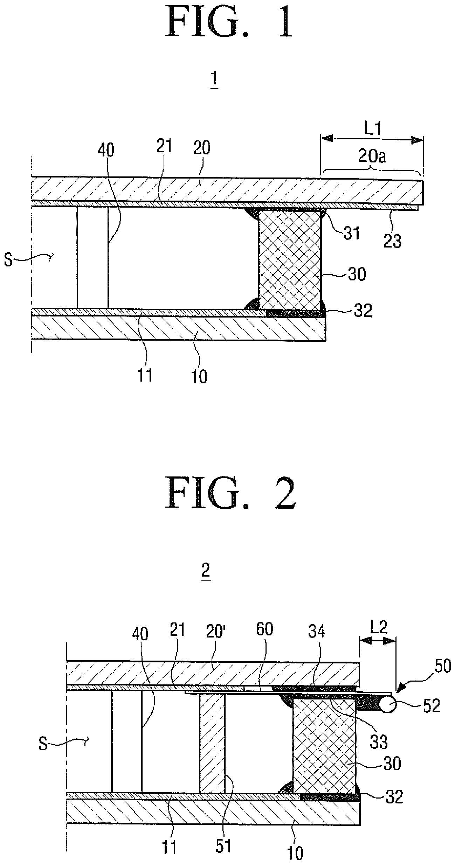

FIG. 1 is a partial sectional view schematically illustrating an example of a field emission apparatus having a connection electrode of a thick film structure. Referring to FIG. 1, the field emission apparatus 1 may have a cathode plate 10, an anode plate 20, a side frame 30, and a plurality of spacers 40.

The cathode plate 10 is formed of a thin glass plate and a cathode electrode 11 is formed on a top surface of the glass plate. When an electric power is applied to the cathode electrode 11, electrons are emitted from the cathode electrode 11.

The anode plate 20 is formed of a thin glass plate having a size corresponding to the cathode plate 10. An anode electrode 21 is formed on a bottom surface of the glass plate. Since high voltage of several hundreds V to several KV is being applied to the anode electrode 21, the electrons emitted from the cathode electrode 11 moves to the anode electrode 21. A fluorescent material is coated on a top side of the anode electrode 21. Therefore, when the electrons incident on the anode electrode 21 crash onto the fluorescent material, light is generated.

The side frame 30 is disposed around entire perimeters of both of the cathode plate 10 and the anode plate 20 between the cathode plate 10 and the anode plate 20 so that the cathode plate 10 and the anode plate 20 can maintain a vacuum while maintaining a predetermined gap therebetween. A sealing material 32 is coated between the cathode plate 10 and a bottom surface of the side frame 30. A sealing material 31 is also coated between the anode plate 20 and a top surface of the side frame 30. Therefore, a space S between the cathode plate 10 and the anode plate 20 is maintained in a vacuum. A frit may be used as the sealing materials 31 and 32.

The plurality of spacers 40 are disposed in the space S between the cathode plate 10 and the anode plate 20 so that the cathode plate 10 and the anode plate 20 can maintain a predetermined gap therebetween in a vacuum. The spacers 40 may be formed of a non-conductive material.

The connection electrode 23 for applying voltage to the anode electrode 21 is formed of a conductive paste on the glass plate consisting of the anode plate 20. In other words, the anode connection electrode 23 of the field emission apparatus 1 is a thick film structure which is printed of the conductive paste on the glass plate in a predetermined pattern. The anode connection electrode 23 which is formed in a predetermined pattern on the anode plate 20 passes through between the top surface of the side frame 30 and the anode plate 20 and is exposed outside the side frame 30. The connection electrode 23 exposing outside is connected with an electric power supply apparatus (not illustrated). The field emission apparatus 1 as illustrated in FIG. 1 has a portion 20a of the anode plate 20 extended to a predetermined length L1 over the side frame 30 for forming the connection electrode 23. The extended portion 20a is a void area that does not generate light and causes the field emission apparatus 1 to have a large size. Also, since the connection electrode 23 having the thick film structure passes through the sealing material 31 for sealing between the anode plate 20 and the side frame 30, the thick film 23 used as the connection electrode 23 is damaged during long-term use so that an electric resistance characteristic of the thick film 23 may be decreased.

For solving the problems, the connection electrode may be formed of a metal. FIG. 2 is a partial sectional view illustrating a field emission apparatus using a metal connection electrode.

Referring to FIG. 2, a field emission apparatus 2 according to an exemplary embodiment may include a cathode plate 10, an anode plate 20', a side frame 30, a plurality of spacers 40 and a connection electrode assembly 50.

The cathode plate 10, the side frame 30, and the plurality of spacers 40 are the same as or similar to those of the above-described field emission apparatus 1 as illustrated in FIG. 1. Therefore, detailed explanations thereof will be omitted.

The anode plate 20' is similar to the above-described anode plate 20. However, there is a difference in that the anode plate 20' does not have the portion 20a extended outside the side frame 30. In this exemplary embodiment, the anode plate 20' can have a smaller size due to the difference.

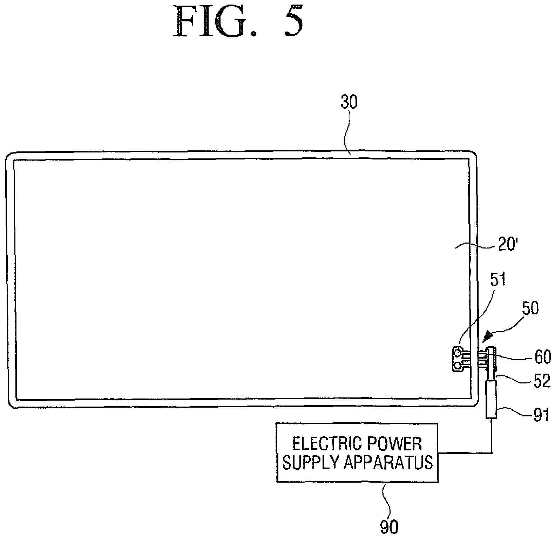

The connection electrode assembly 50 is connected with an external electric power supply apparatus 90 (see FIG. 5) to apply high voltage to the anode electrode 21 which is placed in the space S between the anode plate 20' and the cathode plate 10. Referring to FIGS. 2 to 4, the connection electrode assembly 50 may include a connection electrode 60, a supporting member 51, and a metal pin 52.

The connection electrode 60 is placed between the anode plate 20' and the side frame 30 and includes a first end portion 61 in contact with the anode electrode 21 and a second end portion 62 exposed outside the side frame 30. The connection electrode 60 is formed of a metal having good conductivity. Therefore, when the electric power supply apparatus 90 is connected to the second end portion 62, the anode electrode 21 in contact with the first end portion 61 is supplied with electric power. The connection electrode 60 may be formed as a plate shape of a thin metal having a thickness of approximately 0.5 mm. Also, a chrome oxide film may be formed on a surface of the connection electrode 60. If the chrome oxide film is formed on the connection electrode 60, airtight joining is accomplished in interfaces between the connection electrode 60 and frits which are between the anode plate 20' and the side frame 30.

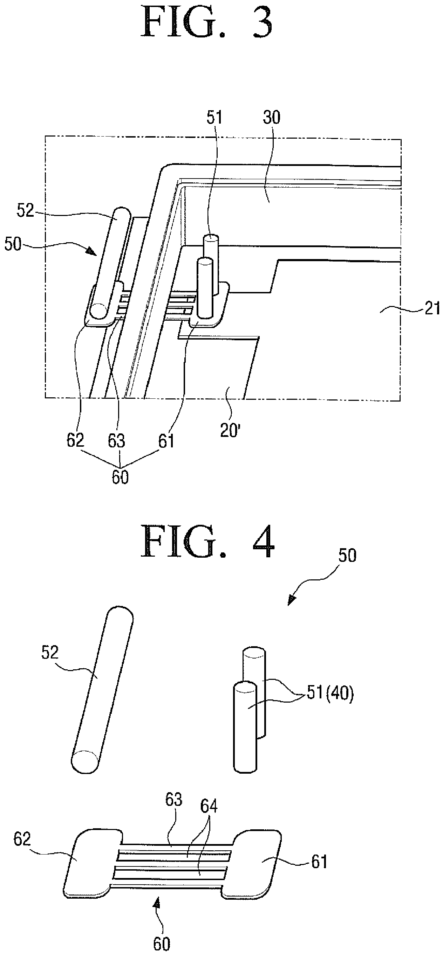

Referring to FIG. 4, the connection electrode 60 has a middle portion 63 connecting the first end portion 61 and the second end portion 62, and the middle portion is formed as three band shapes. This is only one example of the connection electrode 60; therefore, this does not limit the shape of the connection electrode 60. For example, the middle portion 63 may be formed as one band shape having the same width as those of the first end portion 61 and the second end portion 62. However, if the middle portion 63 of the connection electrode 60 is formed as illustrated in FIG. 4, a gap between the anode plate 20' above the connection electrode 60 and the side frame 30 below the connection electrode 60 is effectively sealed. In other words, a first sealing material 33 below the connection electrode 60 and a second sealing material 34 above the connection electrode 60 are connected with each other through slots 64 of the middle portion 63 so that effective sealing is achieved.

The supporting member 51 causes the first end portion 61 of the connection electrode 60 to be closed to the anode electrode 21. One end of the supporting member 51 is fixed to the connection electrode 60 and the other end of the supporting member 51 is in contact with the cathode plate 10. Because the space S between the cathode plate 10 and the anode plate 20' is in a vacuum, the supporting member 51 presses the first end portion 61 of the connection electrode 60 due to vacuum pressure so that the first end portion 61 is closed to, e.g., contacting, the anode electrode 21.

Referring to FIGS. 3 and 4 again, the connection electrode 60 is closed to the anode electrode 21 by two supporting members 51. However, this is only one example. Therefore, the connection electrode 60 can be pressurized by one supporting member 51 or by three or more supporting members 51.

Also, the supporting member 51 is formed of a non-conductive material through which an electric power can not conduct, and can be formed as various shapes as long as the supporting member 51 makes the connection electrode 60 close to the anode plate 20. However, as illustrated in FIG. 2, the supporting member 51 may be formed in the same specification as that of the spacer 40. If at least one of the plurality of spacers 40 is used as the supporting member 51, it does not need to separately manufacture the supporting member 51, thereby being easy to manufacture.

The supporting member 51 may be fixed to the connection electrode 60 so that it is not separated from the connection electrode 60 during assembly. The one end of the supporting member 51 is coated by frit, and then, may be adhered onto the first end portion 61 of the connection electrode 60. Alternatively, a fixing structure is formed on the connection electrode 60 and then may be used to fix the supporting member 51.

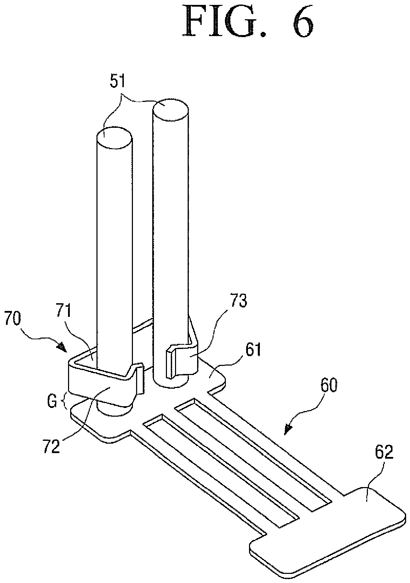

FIGS. 6 to 9 illustrate examples of the connection electrodes 60 with the fixing members 70, 70', 70" and 80 having various structures.

Referring to FIG. 6, the fixing member 70 is disposed at the edge of the first end portion 61 of the connection electrode 60. The fixing member 70 is extended from the first end portion 61 of the connection electrode 60, and includes a bending portion 71 which is bent at a right angle with respect to the top surface of the connection electrode 60 and fixing portions 72 and 73. which are extended from opposite sides of the bending portion 71 and fix a lower end portion of the supporting member 51. The fixing portions 72 and 73 may be spaced apart a predetermined distance G from the connection electrode 60 not to interfere with the connection electrode 60. As illustrated in FIG. 6, the fixing portions 72 and 73 are expended from the opposite sides of the bending portion 71, and are bent substantially in a shape of tweezers so as to pressurize the supporting member 51 onto the bending portion 71 by elastic force thereof. Therefore, the supporting member 51 is fixed to the connection electrode 60 by the elastic force of the fixing portions 72 and 73.

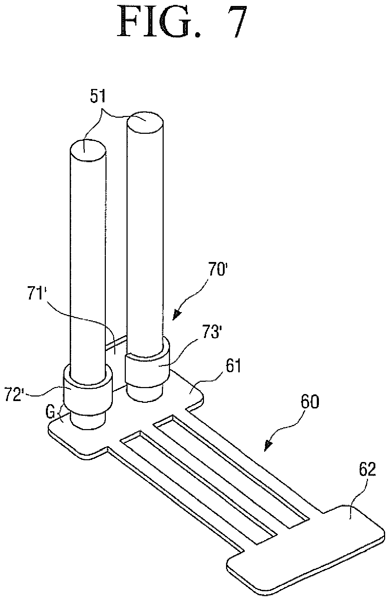

Referring to FIG. 7, a fixing member 70' is disposed at the edge of the first end portion 61 of the connection electrode 60. The fixing member 70' of FIG. 7 includes a bending portion 71' and fixing portions 72' and 73' like the fixing member 70 as illustrated in FIG. 6. The bending portion 71' is bent at a right angle with respect to the top surface of the connection electrode 60 and the fixing portions 72' and 73' are extended from opposite sides of the bending portion 71'. The fixing portions 72' and 73' are formed to have a curvature corresponding to the supporting member 51, wrap the lower end portion of the supporting member 51 and pressurize the supporting member 51 onto the bending portion 71' by the elastic force thereof. Therefore, the supporting member 51 is fixed to the connection electrode 60 by the elastic force of the fixing portions 72' and 73'.

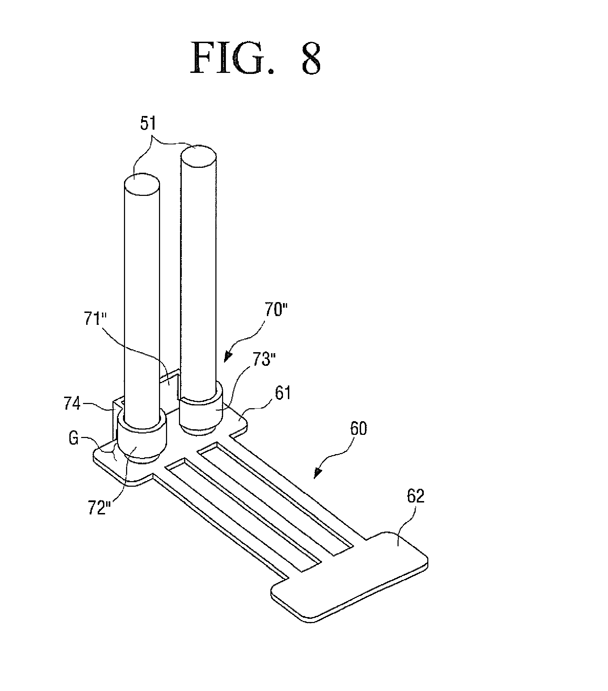

FIG. 8 illustrates the connection electrode 60 having another type of fixing member 70". The fixing member 70" as illustrated in FIG. 8 is similar to the fixing member 70' as illustrated in FIG. 7. However, there is a difference in that the supporting member 51 is not directly in contact with a bending portion 71" and step portions 74 are formed between the bending portion 71" and fixing portions 72" and 73". The fixing portions 72" and 73" may be formed as the same as the fixing portions 72' and 73' as illustrated in FIG. 7.

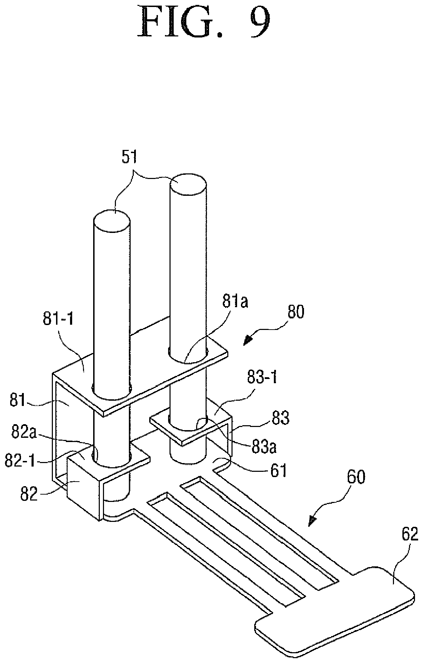

FIG. 9 illustrates the connection electrode 60 having another type of fixing member 80. The fixing members 70, 70' and 70" as illustrated in FIGS. 6 to 8 use the elastic force of the fixing portions 72, 73, 72', 73', 72" and 73" to fix the supporting member 51 onto the connection electrode 60. However, the fixing member 80 as illustrated in FIG. 9 does not use the elastic force to fix the supporting member 51.

Referring to FIG. 9, the fixing member 80 includes a first bending portion 81 which is bent at the edge of the first end portion 61 of the connection electrode 60 at a right angle with respect to the top surface of the connection electrode 60, a second bending portion 82 and a third bending portion 83 which are bent at opposite sides of the first end portion 61 at a right angle with respect to the top surface of the connection electrode 60. A first fixing portion 81-1 is extended from the first bending portion 81 and is bent in parallel to the connection electrode 60. The first fixing portion 81-1 has two upper fixing holes 81a into which the supporting members 51 are inserted. A second fixing portion 82-1 is extended from the second bending portion 82 and is bent in parallel to the connection electrode 60. A third fixing portion 83-1 is extended from the third bending portion 83 and is bent in parallel to the connection electrode 60. The second bending portion and fixing portion 82 and 82-1 and the third bending portion and fixing portion 83 and 83-1 are formed in symmetric shapes to face each other. The second and third fixing portions 82-1 and 83-1 have lower fixing holes 82a and 83a into which the supporting member 51 is inserted, respectively. The first fixing portion 81-1 is formed at a higher level than the second and third fixing portions 82-1 and 83-1. Therefore, if the supporting member 51 is inserted into the upper and lower fixing holes 81a, 82a and 83a of the first, second and third fixing portions 81-1, 82-1 and 83-1, the supporting member 51 is fixed onto the connection electrode 60, thereby not falling down.

In the above description, various types of fixing members 70, 70', 70" and 80 to fix the supporting member 51 onto the connection electrode 60 are explained. However, these are only some examples of the fixing member; therefore, the fixing member is not limited by these. Any type of fixing member can be used as long as it can fix the supporting member 51 onto the connection electrode 60 to avoid falling.

The metal pin 52 is disposed on the second end portion 62 of the connection electrode 60. The metal pin 52 is a part for connecting with the electric power supply apparatus 90 and may be attached onto the second end portion 62 by spot welding, etc. The electric power supply apparatus 90 applies an electric power of high voltage to the anode electrode 21 and may include a socket 91 which is connected with the metal pin 52. Therefore, as illustrated in FIG. 5, when one end of the metal pin 52 is joined to the socket 91, the voltage supplied from the electric power supply apparatus 90 is applied to the anode electrode 21 via the metal pin 52 and the connection electrode 60. Also, the metal pin 52 and the connection electrode 60 may be fixed to the side frame 30 by adhesive so that the second end portion 62 of the connection electrode 60 does not move with respect to the side frame 30. In this exemplary embodiment, the electric power supply apparatus 90 is connected to the connection electrode 60 using the metal pin 52. However, the metal pin 52 may be not used for connection. For example, a terminal (not illustrated) for supplying electric power of the electric power supply apparatus 90 may be directly connected to the second end portion 62 of the connection electrode 60.

As described above, when the connection electrode 60 is formed as a thin metal plate and pressurized to close to the anode electrode 21 by the supporting member 51, even if long-term use, the electric resistance characteristic of the connection electrode 60 is not decreased and the connection electrode 60 is not damaged.

Further, the length L2 of the connection electrode 60 projecting outside from the side frame 30 may be shorter than the length L1 (see FIG. 1) of the anode plate 20a which projects from the side frame 30 and on which a predetermined pattern is printed to form the connection electrode 23. For example, in case of the printed connection electrode 23 (see FIG. 1), the anode plate 20 projects to the length of approximately 10mm. In case of the metal connection electrode 60, the metal connection electrode 60 projects to the length of approximately 5mm. As a result, when the metal connection electrode 60 is used, the void area is reduced so that the field emission apparatus 2 may have a smaller size.

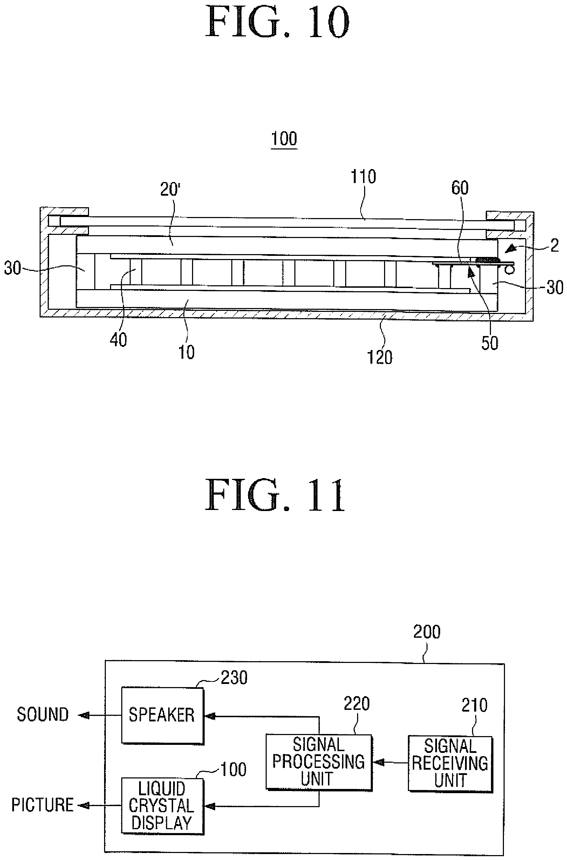

FIG. 10 is a sectional view schematically illustrating a liquid crystal display 100 that uses a field emission apparatus 2 according to an exemplary embodiment as a backlight unit. Referring to FIG. 10, the liquid crystal display 100 may include a liquid crystal panel 110 and a case 120 receiving the liquid crystal panel 110. The above-described field emission apparatus 2 according to an exemplary embodiment is disposed below the liquid crystal panel 110 inside the case 120. The liquid crystal panel 110 is supplied with light by the field emission apparatus 2 as described above. When the field emission apparatus 2 according to an exemplary embodiment is used, since the connection electrode 60 is formed of a metal, the void area of the liquid crystal display 100 may be reduced and degradation of the electric resistance characteristic may be prevented.

FIG. 11 is a functional block diagram illustrating a television 200 which the liquid crystal display 100 according to an exemplary embodiment is applied to. The television 200 may include a signal receiving unit 210, a signal processing unit 220, a speaker 230, and the liquid crystal display 100.

The signal receiving unit 210 receives external signals including picture data and/or audio data. The external signals may include a broadcasting signal transmitted by a broadcasting station or an output signal transmitted by a peripheral device such as a Digital Versatile Disc (DVD) player, a Personal Computer (PC), etc. Therefore, the signal receiving unit 210 may include an antenna and a tuner receiving the broadcasting signal and a connection member such as a connector receiving the output signal that a DVD player or a PC transmits.

The signal processing unit 220 processes the external signals received by the signal receiving unit 210 and then generates picture signals for displaying pictures on the liquid crystal display 100 and sound signals to allow the speaker 230 to output sound.

The speaker 230 receives the sound signal generated by the signal processing unit 220 and outputs sound.

The liquid crystal display 100 receives the picture signals generated by the signal processing unit 220 and displays the pictures. As described above, since the liquid crystal display 100 according to an exemplary embodiment uses a metal connection electrode 60, even if it has been used for a long-time, the electric resistance characteristic is not decreased and the size thereof may be minimized due to reduction of the void area.

In the above description, a case in which the liquid crystal display 100 is applied to the television is explained with reference to FIG. 11. However, this is only one example. The liquid crystal display 100 which uses a field emission apparatus according to an exemplary embodiment as a backlight unit may be applied to various apparatuses such as a computer monitor, an electronic display board, a mobile device, etc.

While the exemplary embodiments have been described, additional variations and modifications of the exemplary embodiments may occur to those skilled in the art once they learn of the basic inventive concepts. Therefore, it is intended that the appended claims shall be construed to include both the above exemplary embodiments and all such variations and modifications that fall within the spirit and scope of the inventive concepts.

## Claims

1. A field emission apparatus comprising:
a cathode plate;
a side frame disposed along a perimeter of the cathode plate;
an anode plate disposed parallel to the cathode plate;
an anode electrode formed on the anode plate;
a connection electrode which is disposed between the anode plate and the side frame and includes a first end portion in contact with the anode electrode and a second end portion outside the side frame; and
a supporting member which supports the first end portion of the connection electrode, wherein the first end portion of the connection electrode is configured to be in contact with the anode electrode.

2. The field emission apparatus of claim 1, further comprising:
a metal pin disposed on a second end portion of the connection electrode.

3. The field emission apparatus of claim 2, further comprising:
an electric power supply apparatus configured to supply an electric power to the anode electrode;
wherein the electric power supply apparatus comprises a socket into which one end of the metal pin is insertable.

4. The field emission apparatus of claim 2, wherein the metal pin is welded to the second end portion of the connection electrode.

5. The field emission apparatus of claim 2, wherein the second end portion of the connection electrode and the metal pin are fixed to the side frame.

6. The field emission apparatus of claim 1, wherein the supporting member is formed in a same shape as one of a plurality of spacers maintaining a gap between the anode plate and the cathode plate.

7. The field emission apparatus of claim 1, wherein the connection electrode comprises a fixing member which fixes one end of the supporting member to the connection electrode.

8. The field emission apparatus of claim 7, wherein the fixing member of the connection electrode comprises a bending portion which extends from the first end portion of the connection electrode and is perpendicular to the connection electrode, and fixing portions which extend from the bending portion and fix the supporting member.

9. The field emission apparatus of claim 1, wherein the supporting member is fixed to the connection electrode by frit.

10. The field emission apparatus of claim 1, wherein the connection electrode comprises a chrome oxide film formed on a surface of the connection electrode.

11. A liquid crystal display comprising:
a field emission apparatus according to any one of the preceding claims.

12. A television comprising;
a liquid crystal display according to claim 11.
